# EUROPÄISCHE PATENTSCHRIFT

(11) **EP 2 163 823 B1**
(45) Veröffentlichungstag und Bekanntmachung des Hinweises auf die Patenterteilung: **27.06.2012**
(21) Anmeldenummer: 08290855.9
(22) Anmeldetag: 11.09.2008
(51) Int. Cl.: H05B 6/64, F24C 7/08

(54) **Garprozessfühler für ein Gargerät**
Cooking sensor for a cooking device
Sonde de cuisson pour un appareil de cuisson

(43) Veröffentlichungstag der Anmeldung: 17.03.2010
(73) Patentinhaber: Topinox Sarl, 68270 Wittenheim (FR)
(72) Erfinder: Kling, Judith, 86899 Landsberg a. Lech (DE); Greiner, Michael, 86899 Landsberg (DE)
(74) Vertreter: Weber-Bruls, Dorothée

(56) Entgegenhaltungen:
- EP-A- 0 313 141
- EP-A- 0 390 651
- EP-A- 1 666 798
- EP-A- 1 757 862
- DE-A1- 3 119 496

## Beschreibung

Die Erfindung betrifft einen Garprozessfühler nach dem Oberbegriff des Anspruchs 1.

Ein Garprozessfühler ist, beispielsweise aus EP 1 757 862 A2 bekannt. Bei dem bekannten Garprozessfühler, der in einem Mikrowellengargerät zum Einsatz kommt, ist eine Vielzahl von Temperatursensoren längs einer in ein Gargut einführbare Spritze angeordnet. Dabei kommt ein Temperaturprozessor zum Einsatz, der einen fest vorgegebenen Abstand zu einem Griff des Garprozessfühlers besitzt und der aufgrund dieses vorgegebenen Abstandes geeignet ist, die Temperatur des Garguts in dessen äußerer Schicht zu bestimmen, um in Abhängigkeit insbesondere von dieser Temperatur einen Mikrowellengenerator einzustellen. Nachteilig ist aber an diesem bekannten Garprozessfühler, dass er keine Mikrowellenleistungserfassung ermöglicht.

Die EP 0 313 141 A1 bezieht sich auf einen Mikrowellenofen mit einer Mikrowellenquelle und einer im Ofen in der Nähe eines zu behandelnden, insbesondere aufzutauenden Produkts platzierten Erfassungseinrichtung, die eine Substanz, die Mikrowellenenergie absorbiert, umfasst, wobei die Aufnahme der Mikrowellenenergie von der Substanz und vom Produkt eine Erhöhung ihrer Temperatur bewirkt und die Temperatur der Erfassungseinrichtung von einem Messorgan gemessen wird. Die Erfassungseinrichtung dient dem Regeln eines Auftauens des Produkts, wozu die Substanz in Schichten auf einen Träger aufgebracht ist. Der Träger ist derart in der Nähe des Produkts angeordnet, dass ein großer Teil der Oberfläche der Erfassungseinrichtung sich nicht in direkter Strahlung der Mikrowellenquelle befindet.

Die DE 31 19 496 A1 bezieht sich auf ein spießartiges Speisenthermometer, das mehrere Temperaturfühler in unterschiedlichen Einstecklagen, insbesondere auch in Höhe der Speisenoberfläche, aufweist, die zur Temperatursteuerung verwendet werden.

Aus der DE 299 23 215 U 1 ist ein Garprozessfühler bekannt, der zusätzlich zu mindestens zwei in einer Spitze angeordneten Temperatursensoren zum Erfassen insbesondere der Kerntemperatur in einem Gargut einen weiteren Temperatursensor zur Messung eines Temperaturwerts außerhalb des Garguts besitzt.

In der DE 690 26 749 T2 bzw. EP 0 390 651 A1 wird eine gattungsgemäße Vorrichtung zum Messen der Größe von lokalen Mikrowellenfeldern und -leistungen in einem Mikrowellengargerät beschrieben, die eine optischen Temperatursensor innerhalb eines mikrowellenabsorbierenden Elements umfasst. Das Element kann polares dielektrisches Material welches innere Wärme erzeugt, wenn es einem oszillierenden Magnetfeld ausgesetzt wird, umfassen.

Das dokument EP 0 390 651 A1 offenbart den Oberbegriff des Anspruchs 1.

Aus der JP 05-172884 A und der JP 05-052889a ist jeweils ein Mikrowellensensor für ein Mikrowellengargerät bekannt, der in einem mikrowellenabsorbierenden Körper ein Thermistorelement beinhaltet und über dessen Ausgabesignale ein Mikrowellengenerator einstellbar ist. Der Mikrowellensensor ist dabei in einer Decke eines Garraums angeordnet.

Aufgabe der Erfindung ist es, den gattungsgemäßen Garprozessfühler derart weiterzuentwickeln, dass er die Nachteile des Stands der Technik überwindet. Insbesondere soll er messen können, welche Mikrowellenleistung an einem in einem Mikrowellengargerät platzierten Gargut tatsächlich ankommt, so dass basierend hierauf die Mikrowellenleistung angepasst werden kann.

Diese Aufgabe wird durch die Merkmale des Anspruchs 1 gelöst.

Dabei kann vorgesehen sein, dass der erste Temperatursensor von dem mikrowellenabsorbierenden Material umhüllt und/oder umspritzt ist.

Mit der Erfindung wird auch vorgeschlagen, dass das mikrowellenabsorbierende Material eine Metallverbindung, insbesondere mit Fe₃O₄ und/oder Titanoxid, und/oder ein Polymer umfasst.

Bevorzugte Ausführungsbeispiele der Erfindung können dadurch gekennzeichnet sein, dass der zumindest eine erste Temperatursensor einen zweiten Temperaturmesspunkt im Bereich der Spitze zur Bestimmung einer Mikrowellenleistungsabsorption im Gargut umfasst.

Dabei kann vorgesehen sein, dass zumindest zwei erste Temperaturmesspunkte und/oder zumindest zwei zweite Temperaturmesspunkte bereitgestellt sind, vorzugsweise entlang der Längsachse des Garprozessfühlers voneinander beabstandet.

Die Differenz der Temperaturen an einem ersten Temperaturmesspunkt und einem zweiten Temperaturmesspunkt und/oder an zwei ersten Temperaturmesspunkten und/oder an zwei zweiten Temperaturmesspunkten kann bzw. können bei der Einstellung des Gargeräts, insbesondere der Mikrowellenquelle des Gargeräts, berücksichtigbar sein, vorzugsweise unter Berücksichtigung der Lage der Temperaturmesspunkte und/oder deren relativen Abstand.

Bevorzugt ist des Weiteren, dass das mikrowellenabsorbierende Material um jeden ersten Temperatursensor gleich oder für unterschiedliche erste Temperatursensoren unterschiedlich ist, insbesondere betreffend die Materialzusammensetzung, Bemaßung und/oder Anordnung um den jeweiligen ersten Temperatursensor.

Auch werden mit der Erfindung Ausführungsformen vorgeschlagen, die gekennzeichnet sind durch zumindest einen zweiten Temperatursensor mit einem Temperaturmesspunkt im Bereich der Spitze zur Erfassung einer Temperatur im Gargut, wobei vorzugsweise zumindest zwei entlang der Längsachse des Garprozessfühlers voneinander beabstandete dritte Temperaturmesspunkte durch zumindest zwei zweite Temperatursensoren bereitgestellt sind.

Zudem kann vorgesehen sein, dass die Ausgabedaten jedes ersten und/oder zweiten Temperatursensors zu verschiedenen Zeitpunkten oder als Funktion der Zeit und/oder unter Zurückgriff auf einen Algorithmus und/oder empirisch bestimmte Werte auswertbar sind.

Die Erfindung liefert auch ein Gargerät mit einem Garraum, zumindest einer Mikrowellenquelle, einer Steuer- und/oder Regeleinrichtung und einem erfindungsgemäßen Garprozessfühler, wobei der Garprozessfühler und die Mikrowellenquelle mit der Steuer- oder Regelrichtung verbunden oder verbindbar sind.

Dabei kann vorgesehen sein, dass eine weitere Heizeinrichtung, insbesondere in Form einer elektrischen Heizeinrichtung und/oder einer gasbetriebenen Heizeinrichtung, einen Wärmetauscher, eine Kühleinrichtung, eine Feuchtigkeitszufuhreinrichtung, eine Feuchtigkeitsabfuhreinrichtung, eine Luftzufuhreinrichtung, eine Luftabfuhreinrichtung, eine Garraumatmosphärenzirkulationseinrichtung, eine Anzeigeeinrichtung und/oder eine Bedieneinrichtung, vorzugsweise jeweils in Wirkverbindung mit der Steuer- und/oder Regeleinrichtung.

Der Erfindung liegt die überraschende Erkenntnis zugrunde, dass dann, wenn im Griff eines in ein Gargut einführbaren Garprozessfühlers, der beispielsweise als Kemtemperaturfühler ausgebildet ist, eine Temperaturmessstelle bereitgestellt ist, die durch einen mit einem mikrowellenabsorbierenden Material umgebenen Temperatursensor gebildet wird und an der eine durch eine Absorption von Mikrowellen auftretende Erwärmung des Materials erfasst wird, um die Mikrowellenleistung einer Miktrowellenquelle bzw, eines Mikrowellengenerators entsprechend der gemessenen Erwärmung unter Zu-Grunde-Legung eines hinterlegten Algorithmus anzupassen, so dass schnell und einfach ein Wunschgarergebnis erreicht wird, da die Anpassung an die Mikrowellenleistung stattfindet, die tatsächlich am Gargut ankommt.

Durch die Anordnung der Temperaturmessstelle mit der Umhüllung aus mikrowellenabsorbierendem Material im Griff des Kerntemperaturfühlers kann die am Gargut ankommende Mikrowellenleistung also sehr genau erfasst werden. Durch diese genaue Bestimmung ist auch eine genaue Regelung auf eine optimale Mikrowellenleistung möglich, was zu einer Energie- und Kosteneinsparung führen kann. Ferner ist es durch die Verwendung eines mikrowellenabsorbierenden Materials in der Nähe des Temperatursensors möglich, schnell auf Änderungen der Mikrowellenleistung zu reagieren. Dies ermöglicht also eine schnell ablaufende Regelschleife.

Die bekannten Verfahren zum Messen einer Mikrowellenleistung, die die Benutzung eines Referenzkörpers fordern, sind in der Handhabung sehr kompliziert. Da sich der Referenzkörper meist auch nicht nahe am Gargut befindet oder erst aufwendig dort platziert werden muss, können Fehlbedienungen auftreten. Erfindungsgemäß wird auf den Einsatz eines Referenzkörpers komplett verzichtet. Auch werden keine zusätzlichen Sensoren benötigt, mit denen eine Mikrowellenleistung gemessen werden soll, da sich der entsprechende Sensor bereits im Griff des Kerntemperaturfühlers befindet. Weil deshalb keine zusätzlichen Sensoren im Mikrowellengargerät verbaut werden müssen, ist auch eine kostengünstige Herstellung eines Mikrowellengargeräts möglich.

Genauere Messergebnisse werden gemäß der Erfindung erhalten, wenn mindestens zwei Temperaturmessstellen im Griff des Kerntemperaturfühlers angeordnet sind, die jeweils eine von einem Material, das Mikrowellen absorbiert, umhüllten Temperatursensor umfassen, wobei die mikrowellenabsorbierenden Materialien an den beiden Temperaturmessstellen unterschiedlich sein können und somit zu unterschiedlichen Erwärmungen führen können, so dass auch die entsprechenden Temperaturunterschiede berücksichtigt werden können.

Wenn erfindungsgemäß noch ein Temperatursensor innerhalb eines mikrowellenabsorbierenden Materials in der in das Gargut einführbaren Spitze des Kerntemperaturfühlers zum Einsatz kommt, kann selbst die Mikrowelleneindringtiefe in das Gargut erfasst, ausgewertet und einer Steuerung oder Regelung eines Mikrowellengenerators zugrunde gelegt werden.

Das mikrowellenabsorbierende Material besteht vorzugsweise aus einer Metallverbindung, insbesondere aus einem Stoffgemisch von Fe₃O₄ und Titanoxid, oder aus einem speziellen Polymer.

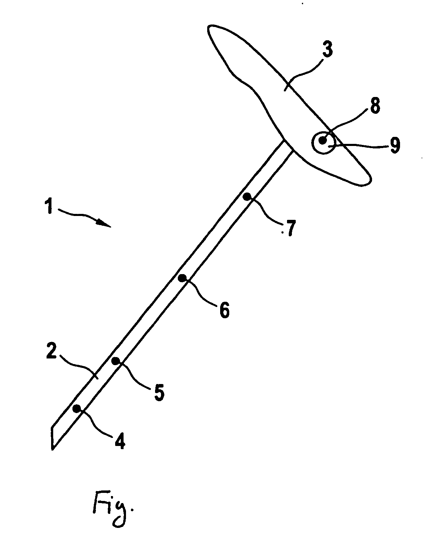

Weitere Merkmale und Vorteile der Erfindung ergeben sich aus der nachstehenden Beschreibung, in der eine erfindungsgemäße Ausführungsform beispielhaft anhand einer aus einer einzigen Figur bestehenden Zeichnung erläutert wird. Dabei zeigt die
- Figur: eine perspektivische Ansicht eines erfindungsgemäßen Kemtemperaturfühlers.

Wie der Figur zu entnehmen ist, umfasst ein erfindungsgemäßer Garprozessfühler in Form eines Kerntemperaturfühlers 1 eine Spitze 2 und einen Griff 3, wobei die Spitze 2 in ein nicht dargestelltes Gargut einführbar ist und der Griff 3 über ein nicht gezeigtes Kabel mit einer Regeleinheit eines Gargeräts (nicht gezeigt) verbunden ist. Im Bereich der Spitze 2 sind vier Temperatursensoren angeordnet, wie in der Figur durch längs der Spitze verteilte Temperaturmesspunkte 4, 5, 6, 7 angedeutet, wobei die Temperatursensoren dem Erfassen von Temperaturen im Gargut dienen, um insbesondere einen Temperaturgradienten im Gargut und/oder die Kerntemperatur des Garguts zu bestimmen. Im Griff 3 ist ein weiterer Temperaturmesspunkt 8 in der Figur dargestellt, wobei der dazugehörige Temperatursensor von einem mikrowellenabsorbierenden Material umgeben ist, weshalb um den Temperaturmesspunkt 8 herum eine Umhüllung in der Figur dargestellt ist, die beispielsweise aus einem Polymer bereitgestellt wird. Treffen Mikrowellen auf die Umhüllung 9 auf, so erwärmt sich dieselbe und der zum Temperaturmesspunkt 8 gehörende Temperatursensor erfasst die entsprechende Temperatur und damit die Mikrowellenleistung am Gargut. Somit kann die erfasste Mikrowellenleistung zur Regelung einer nicht dargestellten Mikrowellenquelle über die Regeleinheit geregelt werden, wobei hierbei auch der im Gargut erfasste Temperaturgradient und/oder die daraus bestimmte Kerntemperatur berücksichtigt werden kann.

Mit dem Kemtemperaturfühler 1, der herkömmlicherweise beim kerntemperaturgesteuerten Garen zum Einsatz kommt, wird also gleichzeitig die beim Gargut tatsächlich ankommende Mikrowellenleistung erfasst, um so ein Mikrowellengaren zu optimieren. Besonders vorteilhaft ist der Einsatz eines erfindungsgemäßen Kerntemperaturfühlers 1 in einem Gargerät, in dessen Garraum Gargut mit Heißluft, Dampf und/oder Mikrowellen wahlweise beaufschlagbar ist, wobei in Abhängigkeit von Ausgabedaten nur einer einzigen Messeinrichtung, nämlich dem Kemtemperaturfühler 1, eine Heißluftquelle, ein Dampfgenerator und eine Mikrowellenquelle angesteuert werden können. Dabei können beispielsweise die Heißluftquelle und der Dampfgenerator in Abhängigkeit von einem im Gargut erfassten Temperaturgradienten durch Auswertung von Messdaten an den Temperaturmesspunkten 4 bis 7 und die Mikrowellenquelle in Abhängigkeit von der an dem Temperaturmesspunkt 8 erfassten Mikrowellenleistung geregelt werden.

### Bezugszeichenliste

- 1: Kerntemperaturfühler
- 2: Spitze
- 3: Griff
- 4: Temperaturmesspunkt
- 5: Temperaturmesspunkt
- 6: Temperaturmesspunkt
- 7: Temperaturmesspunkt
- 8: Temperaturmesspunkt
- 9: Umhüllung

## Patentansprüche

1. Garprozessfühler (1) für ein Gargerät zum Garen von Gargut, der eine zumindest teilweise in das Gargut einführbare Spitze (2) und zumindest einen Temperatursensor aufweist, wobei über die Ausgabedaten zumindest eines ersten Temperatursensors zumindest eine Mikrowellenquelle des Gargeräts einstellbar ist, und
der zumindest eine erste Temperatursensor von einem mikrowellenabsorbierenden Material (9) umgeben ist,
wobei der zumindest eine erste Temperatursensor einen ersten Temperaturmesspunkt (8) zur Bestimmung einer am Gargut ankommenden Mikrowellenleistung aufweist, **dadurch gekennzeichnet, dass** der Garprozessfühler (1) einen Griff (3) umfasst, und dass der erste Temperaturmesspunkt (8) im Bereich des Griffs (3) ist.

2. Garprozessfühler nach Anspruch 1, **dadurch gekennzeichnet, dass** der erste Temperatursensor von dem mikrowellenabsorbierenden Material (9) umhüllt und/oder umspritzt ist.

3. Garprozessfühler nach Anspruch 1 oder 2, **dadurch gekennzeichnet, dass** das mikrowellenabsorbierende Material (9) eine Metallverbindung, insbesondere mit Fe₃O₄ und/oder Titanoxid, und/oder ein Polymer umfasst.

4. Garprozessfühler nach einem der vorangehenden Ansprüche, **dadurch gekennzeichnet, dass**
der zumindest eine erste Temperatursensor
einen zweiten Temperaturmesspunkt im Bereich der Spitze zur Bestimmung einer Mikrowellenleistungsabsorption im Gargut umfasst.

5. Garprozessfühler nach einem der vorangehenden Ansprüche, **dadurch gekennzeichnet, dass**
zumindest zwei erste Temperaturmesspunkte und/oder zumindest zwei zweite Temperaturmesspunkte bereitgestellt sind, vorzugsweise entlang der Längsachse des Garprozessfühlers voneinander beabstandet.

6. Garprozessfühler nach einem der vorangehenden Ansprüche, **dadurch gekennzeichnet, dass**
das mikrowellenabsorbierende Material (9) um jeden ersten Temperatursensor gleich oder für unterschiedliche erste Temperatursensoren unterschiedlich ist, insbesondere betreffend die Materialzusammensetzung, Bemaßung und/oder Anordnung um den jeweiligen ersten Temperatursensor.

7. Garprozessfühler nach einem der vorangehenden Ansprüche, **gekennzeichnet durch** zumindest einen zweiten Temperatursensor mit einem Temperaturmesspunkt (4 - 7) im Bereich der Spitze (2) zur Erfassung einer Temperatur im Gargut, wobei vorzugsweise zumindest zwei entlang der Längsachse des Garprozessfühlers voneinander beabstandete dritte Temperaturmesspunkte (4 - 7) **durch** zumindest zwei zweite Temperatursensoren bereitgestellt sind.

8. Garprozessfühler nach einem der vorangehenden Ansprüche, **dadurch gekennzeichnet, dass**
die Ausgabedaten jedes ersten und/oder zweiten Temperatursensors zu verschiedenen Zeitpunkten oder als Funktion der Zeit und/oder unter Zurückgriff auf einen Algorithmus und/oder empirisch bestimmte Werte auswertbar sind.

9. Gargerät mit einem Garraum, zumindest einer Mikrowellenquelle, einer Steuer- und/oder Regeleinrichtung und einem Garprozessfühler (1) nach einem der vorangehenden Ansprüche, wobei der Garprozessfühler (1) und die Mikrowellenquelle mit der Steuer- und Regeleinrichtung verbunden oder verbindbar sind.

10. Gargerät nach Anspruch 9, **gekennzeichnet durch**
eine weitere Heizeinrichtung, insbesondere in Form einer elektrischen Heizeinrichtung und/oder einer gasbetriebenen Heizeinrichtung, einen Wärmetauscher, eine Kühleinrichtung, eine Feuchtigkeitszufuhreinrichtung, eine Feuchtigkeitsabfuhreinrichtung,
eine Luftzufuhreinrichtung, eine Luftabfuhreinrichtung, eine Garraumatmosphärenzirkulationseinrichtung, eine Anzeigeeinrichtung und/oder eine Bedieneinrichtung, vorzugsweise jeweils in Wirkverbindung mit der Steuer- und/oder Regeleinrichtung.

## Claims

1. A cooking probe (1) for a cooking appliance for cooking food, having a tip (2) that can be inserted, at least partially, into the food to be cooked, and having at least one temperature sensor, wherein at least one microwave source of the cooking appliance is adjustable via the output data of at least one first temperature sensor, and wherein the at least one first temperature sensor is surrounded by a microwave absorbing material (9), wherein the at least one first temperature sensor has a first temperature measurement point (8) for measuring a microwave power reaching the food to be cooked,
**characterized in that**
the cooking probe (1) comprises a handle (3) and the first temperature measurement point (8) is located in the region of the handle (3).

2. A cooking probe according to claim 1, **characterized in that**
the first temperature sensor is wrapped in and/or overmolded with the microwave absorbing material (9).

3. A cooking probe according to claim 1 or 2, **characterized in that**
the microwave absorbing material (9) comprises a metal compound, particularly with Fe₃O₄ and/or titanium oxide, and/or a polymer.

4. A cooking probe according to one of the preceding claims, **characterized in that**
the at least one first temperature sensor comprises a second temperature measurement point in the region of the tip for measuring an absorption of microwave power in the food to be cooked.

5. A cooking probe according to one of the preceding claims, **characterized in that**
at least two first temperature measurement points and/or at least two second temperature measurement points are provided, preferably spaced apart from each other along the longitudinal axis of the cooking probe.

6. A cooking probe according to one of the preceding claims, **characterized in that**
the microwave absorbing material (9) is the same around each first temperature sensor, or is different for different first temperature sensors, particularly regarding material composition, dimensions and/or arrangement around the respective first temperature sensor.

7. A cooking probe according to one of the preceding claims, **characterized by**
at least one second temperature sensor with a temperature measurement point (4-7) in the region of the tip (2) for recording a temperature inside the food to be cooked, wherein preferably at least two third temperature measurement points (4-7) are provided via at least two second temperature sensors, said third temperature measurement points being spaced apart from each other along the longitudinal axis of the cooking probe.

8. A cooking probe according to one of the preceding claims, **characterized in that**
the output data of each first and/or second temperature sensor can be evaluated at different times or as a function of time and/or by using an algorithm and/or empirically determined values.

9. A cooking appliance comprising a cooking chamber, at least one microwave source,
an open-loop and/or closed-loop control unit and a cooking probe (1) according to one of the preceding claims, wherein the cooking probe (1) and the microwave source are connected or can be connected to the control unit.

10. A cooking device according to claim 9, **characterized by**
a further heating unit, particularly in the form of an electric heating unit and/or a gas-powered heating unit, a heat exchanger, a cooling unit, a moisture supply unit, a moisture removal unit, an air supply unit, an air removal unit, a cooking chamber climate circulation unit, a display unit and/or an operating unit, each preferably in operative connection with the open-loop and/or closed-loop control unit.

## Revendications

1. Sonde de cuisson (1) pour un appareil de cuisson destiné à faire cuire des articles à cuire, qui présente une pointe (2) pouvant être introduite au moins partiellement dans l'article à cuire et au moins un capteur de température, au moins une source de micro-ondes de l'appareil de cuisson pouvant être réglée par les données de sortie d'au moins un premier capteur de température, et le au moins un premier capteur de température étant entouré d'un matériau (9) absorbant les micro-ondes, le au moins un premier capteur de température présentant un premier point de mesure de température (8) pour déterminer une puissance de micro-ondes arrivant sur l'article à cuire, **caractérisée en ce que** la sonde de cuisson (1) comprend une poignée (3) et **en ce que** le premier point de mesure de température (8) se trouve dans la zone de la poignée (3).

2. Sonde de cuisson selon la revendication 1, **caractérisée en ce que** le premier capteur de température est enveloppé et/ou enrobé par le matériau (9) absorbant les micro-ondes.

3. Sonde de cuisson selon la revendication 1 ou 2, **caractérisée en ce que** le matériau (9) absorbant les micro-ondes comprend une liaison de métal, en particulier avec du Fe₃O₄ et/ou de l'oxyde de titane, et/ou un polymère.

4. Sonde de cuisson selon l'une des revendications précédentes, **caractérisée en ce que** le au moins un premier capteur de température
comprend un second point de mesure de température dans la zone de la pointe pour déterminer une absorption de puissance de micro-ondes dans l'article à cuire.

5. Sonde de cuisson selon l'une des revendications précédentes, **caractérisée en ce que** au moins deux premiers points de mesure de température et/ou au moins deux seconds points de mesure de température sont mis à disposition, sont espacés les uns des autres de préférence le long de l'axe longitudinal de la sonde de cuisson.

6. Sonde de cuisson selon l'une des revendications précédentes, **caractérisée en ce que** le matériau (9) absorbant les micro-ondes est identique autour de chaque premier capteur de température ou différent pour différents premiers capteurs de température, en particulier en ce qui concerne la composition du matériau, les cotes et/ou l'agencement autour du premier capteur de température respectif.

7. Sonde de cuisson selon l'une des revendications précédentes, **caractérisée par**
au moins un second capteur de température avec un point de mesure de température (4 - 7) dans la zone de la pointe (2) pour l'enregistrement d'une température dans l'article à cuire, de préférence au moins deux troisièmes points de mesure (4 - 7) espacés les uns des autres le long de l'axe longitudinal de la sonde de cuisson étant fournis par au moins deux seconds capteurs de température.

8. Sonde de cuisson selon l'une des revendications précédentes, **caractérisée en ce que** les données de sortie de chaque premier et/ou chaque second capteur de température peuvent être analysées à différents moments ou en fonction du temps et/ou en recourant à un algorithme ou à des valeurs déterminées de façon empirique.

9. Appareil de cuisson comprenant une chambre de cuisson, au moins une source de micro-ondes, un dispositif de commande et/ou de réglage et une sonde de cuisson (1) selon l'une des revendications précédentes, la sonde de cuisson (1) et la source de micro-ondes étant reliées ou pouvant être reliées avec le dispositif de commande et de réglage.

10. Appareil de cuisson selon la revendication 9, **caractérisé par**
un autre dispositif de chauffage, en particulier sous la forme d'un dispositif de chauffage électrique et/ou d'un dispositif de chauffage fonctionnant au gaz, un échangeur de chaleur, un dispositif de refroidissement, un dispositif d'alimentation en humidité, un dispositif d'évacuation d'humidité, un dispositif d'alimentation en air, un dispositif d'évacuation d'air, un dispositif de circulation d'atmosphère de chambre de cuisson, un dispositif d'affichage et/ou un dispositif de commande, de préférence à chaque fois en liaison active avec le dispositif de commande et/ou de réglage.
